# FASCICULE DE BREVET EUROPEEN

(11) **EP 3 881 231 B1**
(45) Date de publication et mention de la délivrance du brevet: **20.07.2022**
(21) Numéro de dépôt: 19829272.4
(22) Date de dépôt: 12.11.2019
(51) Int. Cl.: G06K 9/62

(54) **PROCEDE POUR L'APPRENTISSAGE D'UNE MACHINE AUTOMATIQUE APTE A DETERMINER DES CARACTERISTIQUES D'ELEMENTS VEGETAUX**
VERFAHREN ZUM TRAINIEREN EINER MASCHINE, DIE ZUR BESTIMMUNG VON EIGENSCHAFTEN VON PFLANZENELEMENTEN FÄHIG IST
METHOD FOR TRAINING A MACHINE ABLE TO DETERMINE CHARACTERISTICS OF PLANT ELEMENTS

(30) Priorité: 13.11.2018 FR 1871503
(43) Date de publication de la demande: 22.09.2021
(73) Titulaire: INARIX, 75009 Paris (FR)
(72) Inventeur: Chapelle, Pierre, 75013 Paris (FR)
(74) Mandataire: Loyer & Abello
(86) Numéro de dépôt international: PCT/FR2019/052690
(87) Numéro de publication internationale: WO 2020/099778

(56) Documents cités:
- YANG SHUQIN ET AL: "Predicting wheat kernels' protein content by near infrared hyperspectral imaging", INTERNATIONAL JOURNAL OF AGRICULTURAL AND BIOLOGICAL ENGINEERING, vol. 9, no. 2, 1 mars 2016 (2016-03-01), pages 163-170, XP055607844, DOI: 10.3965/j.ijabe.20160902.1701
- NICOLA CAPORASO ET AL: "Protein content prediction in single wheat kernels using hyperspectral imaging", FOOD CHEMISTRY, vol. 240, 12 juillet 2017 (2017-07-12), pages 32-42, XP055608422, NL ISSN: 0308-8146, DOI: 10.1016/j.foodchem.2017.07.048
- SINGH SIMRANJEET ET AL: "A Survey on Image Processing Techniques for Seeds Classification", 2018 4TH INTERNATIONAL CONFERENCE ON COMPUTING SCIENCES (ICCS), IEEE, 30 août 2018 (2018-08-30), pages 143-150, XP033496039, DOI: 10.1109/ICCS.2018.00032

## Description

L'invention concerne le domaine de la détermination de caractéristiques d'éléments végétaux.

Les végétaux poussent soit de façon naturelle soit du fait de leur culture par l'homme. Ces végétaux se présentent souvent sous la forme d'éléments végétaux comme des grains, des graines, des tiges, des fleurs ou d'autres formes élémentaires. Ainsi, l'industrie agricole produit de nombreuses céréales fournissant des éléments végétaux comme les grains de blé, les grains de maïs, chacune de ces catégories comportant en général plusieurs variétés. Ces éléments végétaux sont souvent utilisés dans la chaine alimentaire. Par exemple, la culture du blé fournit des grains de blés qui sont broyés pour obtenir de la farine utilisée pour produire, selon ses caractéristiques de composition, du pain pour la nourriture humaine ou des aliments pour la nourriture animale. Le choix entre ces deux applications dépend en particulier de la teneur en protéine de cette farine de blé. Quant à elle, la récolte des pommes fournit des lots de pommes qui contiennent souvent des pommes de variétés différentes : reinettes, golden, etc. Par la suite, l'exemple des grains de blés sera le plus souvent retenu.

La teneur en protéine d'un lot de farine de blé est en général mesurée sur un échantillon représentatif de grains de blés prélevé dans le lot, cet échantillon étant donc constitué d'un mélange de grains de blés. La teneur en protéine moyenne de l'échantillon peut être mesurée de façon directe, soit par une méthode chimique dite méthode Kjeldahl, soit par une méthode physique, par combustion, dite méthode Dumas. La teneur en protéine moyenne de l'échantillon peut également être mesurée de façon indirecte sur un mélange de grains entiers par spectrométrie dans le proche infrarouge, aussi appelée NIRS en anglais, pour Near Infra-Red Spectroscopy.

Ces trois méthodes permettent de déterminer la quantité de matières azotées totale N de la farine obtenue à partir du lot étudié. Cette quantité est exprimée sur une base matière sèche. Elle est ensuite multipliée par un coefficient égal à 5,7 pour un blé destiné à l'alimentation humaine et à 6,25 pour un blé destiné à l'alimentation animale. Le résultat obtenu est comparé à un seuil qui dépend de l'application. La qualité du mélange est ainsi jugée adaptée soit à sa consommation par l'homme, soit à sa consommation par des animaux. La quantité de blé nécessaire à ces trois mesures de teneur en protéine (Kjeldahl, Dumas, NIRS) est typiquement de quelques centaines de grammes de grains de blés ou un équivalent en volume qui est voisin d'un demi-litre, dépendant de la densité des grains de blés.

La connaissance de la teneur en protéine d'un lot de blé peut avoir d'autres applications. Ainsi, si plusieurs parcelles de blé ont été traitées avec des engrais différents, la comparaison de la teneur en protéine moyenne de blé obtenu peut servir à qualifier la performance de ces engrais.

Les trois méthodes rappelées (Kjeldahl, Dumas et NIRS) présentent l'inconvénient d'un coût élevé car les échantillons constitués de mélanges de grains de blés doivent être envoyés dans des laboratoires spécialisés pour évaluation. Il est à noter concernant la méthode NIRS que quelques prototypes ont été développés pour réaliser des réflectomètres compacts permettant une analyse sur les lieux de production ou de transformation des lots de grains. C'est par exemple le cas des systèmes infrarouge portatifs à LED comme SCiO de la société Consumerphysics. Toutefois, ces appareils restent relativement onéreux.

Dans US5321764, l'analyse d'image a été utilisée pour déterminer la variété d'un mélange de grains de blé. Le procédé utilise une caméra vidéo et un ordinateur pour acquérir et traiter des images de grains de blés, notamment les images de l'amande et du germe. Pour chaque grain, ces images sont traitées en format numérique, les données correspondantes sont stockées dans un ordinateur, pour comparaison ultérieure avec un blé inconnu. D'autres procédés d'analyse d'images de grains de blé sont enseignées dans "Predicting wheat kernels' protein content by near infrared hyperspectral imaging" (Yang Shuqin et al., INTERNATIONAL JOURNAL OF AGRICULTURAL AND BIOLOGICAL ENGINEERING, vol. 9, no. 2, 1 mars 2016 (2016-03-01), pages 163-170, 4,DOI: 10.3965/ j.ijabe.20160902.1701) ou bien dans "Protein content prédiction in single wheat kernels using hyperspectral imaging" (Caporaso et al., FOOD CHEMISTRY, vol. 240, 12 juillet 2017 (2017-07-12), pages 32-42, NL ISSN: 0308-8146, DOI: 10.1016/j.foodchem.2017.07.048).

Le besoin existe donc de méthodes d'analyse de mélanges d'éléments végétaux comme des mélanges de graines de céréales, de fruits ou d'autres végétaux encore. Ces analyses doivent pouvoir permettre de déterminer des caractéristiques de ces éléments végétaux. Ces caractéristiques peuvent être liées à leur composition, par exemple leur teneur en protéine, une équivalence de l'indice de chute de Hagberg (méthode normée pour les grains de blé), le taux d'humidité, le taux de mycotoxines ou d'autres types de caractéristiques de composition.

Ces caractéristiques peuvent aussi être liées aux quantités de différentes variétés d'un même élément végétal contenues dans un mélange végétal, par exemple un mélange de pommes de différentes variétés.

Ces méthodes d'analyse doivent présenter un coût réduit et utiliser des informations disponibles sur les lieux de production ou de transformation de la chaine alimentaire, tout en donnant des résultats fiables.

Il existe aussi le besoin d'une méthode pour déterminer des caractéristiques d'éléments végétaux ayant tous types d'apparence : celle de grains, de tiges, de fleurs, ou d'autres apparences encore. Par exemple, l'industrie textile s'intéresse à la caractéristique de tiges de chanvre ou l'industrie des cosmétiques à celle des fleurs de roses.

Il existe aussi, au moment ou les préoccupations écologiques deviennent essentielles, le besoin de méthodes pouvant être mises en œuvre dans des lieux de croissance naturelle des végétaux. Par exemple, il existe le besoin de mesurer la teneur en protéine de grains de blés naturels tels qu'ils peuvent pousser spontanément dans la nature. Le besoin existe donc d'une méthode permettant de déterminer la caractéristique d'éléments végétaux issus de l'activité humaine, comme considéré à titre d'exemple dans la suite dans cette description, mais aussi les éléments végétaux offerts spontanément par la nature, sans intervention humaine.

L'invention a pour but d'améliorer la situation en palliant aux inconvénients des solutions précédemment connues.

L'invention propose à cet effet un procédé pour l'apprentissage d'une machine d'apprentissage automatique, apte à déterminer des caractéristiques d'éléments végétaux, tel que défini dans la revendication 1.

En outre ce procédé peut être réitéré au moyen d'échantillons complémentaires, de photographies d'échantillons complémentaires, d'images d'éléments végétaux isolés complémentaires et de matrices d'images complémentaires.

Le procédé selon l'invention est tel que ledit calculateur peut faire partie du groupe comportant un réseau de neurones convolutif, un algorithme k-Nearestneighbors algorithms ou un algorithme support vector machine.

Dans le cas où ledit calculateur est un réseau de neurones convolutif, ledit élément de calcul peut être le poids synaptique d'un neurone.

Selon le procédé proposé, l'échantillon peut être un mélange d'éléments végétaux faisant partie du groupe comprenant un grain, une graine, une tige, une fleur, un fruit.

Le procédé peut être aussi tel que les éléments végétaux font partie du groupe comprenant des céréales, du café, du cacao, des grains végétaux, des graines végétales, des mélanges de variétés ou d'espèces.

Dans le procédé selon l'invention, ladite caractéristique peut faire partie du groupe contenant une valeur ou une plage de valeurs de composition d'élément végétal, ou une variété d'élément végétal.

Le procédé peut être tel que la valeur de caractéristique d'échantillon est obtenue à partir d'une méthode faisant partie du groupe comprenant d'une part, pour une caractéristique de composition, la méthode de Kjeldahl, la méthode de Dumas ou la méthode de spectroscopie dans le proche infrarouge ou le « falling number » pour l'indice de chute de Hagberg, et d'autre part, pour une caractéristique de variété, la détermination de la variété majoritaire dans l'échantillon.

Le procédé peut être tel que la caractéristique mesurée fait partie d'un groupe contenant la mesure du taux de protéine, de l'indice de chute de Hagberg, du taux de myxotoxines (Déoxynivalénol, zéaralénone, ochratoxine), du taux d'humidité, du poids spécifique ou d'un taux d'impuretés.

Le procédé selon l'invention peut mettre en œuvre des mesures utilisent les kits ELISA ou kits Bandelettes pour la mesure des mycotoxines ou l'humidimètre (piézo-électrique ou infrarouge) pour la mesure de l'humidité ou l'analyse visuelle pour la mesure du taux d'impureté, ou le « falling number » pour l'indice de chute de Hagberg.

Le procédé selon l'invention peut être tel que l'indicateur d'appartenance aux deux classes fait partie du groupe comprenant l'indication d'une parmi les dites deux classes ou l'indication d'une probabilité d'appartenance à l'une ou à l'autre desdites deux classes.

Le procédé selon l'invention peut comporter de plus les étapes consistant à enregistrer une nouvelle photographie d'échantillon d'un nouvel échantillon constitué d'un nouveau mélange d'éléments végétaux de caractéristique inconnue, obtenir au moyen d'un logiciel d'analyse d'images une nouvelle image d'élément végétal isolé contenue dans ladite nouvelle photographie d'échantillon, et une nouvelle matrice d'image correspondante, ledit calculateur calculant un indicateur d'appartenance auxdites deux classes pour ladite nouvelle matrice d'image.

Une idée à la base de l'invention est de faire coopérer un logiciel d'analyse d'image, et une machine d'apprentissage automatique, chacun d'eux ayant les fonctions complémentaires suivantes : le logiciel d'analyse d'images est utilisé pour obtenir des matrices d'images, par exemple correspondant à des images de grains de blé isolé dans une image d'un mélange de grains de blés. La machine d'apprentissage automatique est utilisée pour calculer une caractéristique de cet élément végétal isolé, par exemple la teneur en protéine ou la variété de grain de blé correspondant.

L'avantage déterminant de cette coopération est de permettre l'apprentissage de la machine d'apprentissage automatique à partir d'un nombre réduit d'échantillons de mélanges de grains de blés. Il est en effet connu qu'une machine d'apprentissage automatique doit être pré-entraînée à l'aide de milliers de cas d'apprentissage. Une méthode pourrait consister à entraîner une machine d'apprentissage automatique à déterminer la composition d'échantillons consistant en des mélanges d'éléments végétaux, par exemple des mélanges de grains de blés. Le nombre de cas d'apprentissage automatique serait alors limité au nombre de mélanges de grains de blés dont la composition aurait put être déterminée par ailleurs, au moyen d'une des méthodes connues (par exemple Kjeldahl, Dumas ou NIRS). Si 1000 cas d'apprentissage automatique étaient nécessaires, 1000 mélanges de grains de blés devraient être ainsi caractérisés en composition.

L'invention propose au contraire de réaliser l'apprentissage de la machine d'apprentissage automatique à partir des éléments végétaux individuels (par exemple des grains de blés individuels) et non des mélanges. Ces éléments végétaux individuels sont ceux pour lequel le logiciel d'analyse d'images a pu donner une image d'élément végétal isolé à partir d'une photographie du mélange auquel il appartient. Une idée importante à la base de l'invention est d'attribuer la même composition fictive, à par exemple, 100 éléments végétaux individuels (qui peuvent être 100 grains de blé), dont les images ont été isolées dans un même mélange au moyen du logiciel d'analyse d'image. Cette composition fictive, qui est la même pour les 100 éléments végétaux, est la composition moyenne du mélange auxquels appartiennent ces 100 éléments végétaux. Cette composition du mélange est facilement déterminable par ailleurs, comme on l'a vu, au moyen d'une méthode connue (par exemple Kjeldahl, Dumas ou NIRS). La détermination de la composition de 10 mélanges fournit alors 1000 cas d'apprentissage automatique (100 fois plus). En effet, même si une même valeur fictive de composition est attribuée à 100 éléments végétaux individuels issus du même mélange, leurs images, que nous appelons donc ici images d'éléments végétaux isolés, obtenues au moyen du logiciel d'analyse d'images, sont différentes, fournissant donc bien 1000 cas d'apprentissage automatique différents pour la machine d'apprentissage automatique. L'invention présente donc un avantage de coût considérable.

D'autres caractéristiques et avantages de l'invention apparaîtront à l'examen de la description détaillée ci-après et des dessins annexés, très schématiques, sur lesquels :
[Fig.1] représente des étapes pour construire la base de données des images d'apprentissage d'une machine d'apprentissage automatique de type CNN.
[Fig.2] représente un exemple de calculateur d'une machine d'apprentissage automatique, ce calculateur consistant en un réseau CNN recevant à son entrée une matrice d'image de gain de blé isolé et délivrant à sa sortie un indicateur d'appartenance à des classes de teneur en protéine pour des grains de blé.
[Fig.3] représente de façon très résumée un processus d'apprentissage automatique d'une machine d'apprentissage automatique pour qu'elle devienne apte à déterminer une caractéristique d'un élément végétal individuel, à partir d'une matrice d'image correspondante.
[Fig.4] présente les étapes du procédé d'apprentissage d'une machine d'apprentissage automatique puis son utilisation pour détermine la teneur en protéine d'un échantillon inconnu.

Les dessins annexés pourront non seulement servir à compléter l'invention, mais aussi contribuer à sa définition, le cas échéant.

Dans un but de simplicité, et sauf mention contraire, le mode de réalisation de l'invention que nous présentons dans la suite de cette description est relatif à la mesure de la teneur en protéine de grains de blés individuels à partir de la connaissance de la teneur en protéine de mélanges de grains de blés appelés ici échantillons. Ce choix ne doit toutefois pas être considéré comme limitatif de la portée de l'invention.

Dans le mode de réalisation proposé, 62 lots de blés tendres, d'origines et donc de teneurs en protéine généralement différentes, sont représentés par 62 échantillons correspondants, qui sont des mélanges de grains de blés, le volume de chaque échantillon étant approximativement de 0,5 litres. Pour chaque échantillon, on enregistre 30 photographies numériques différentes. Si l'on considère les 30 photographies associées à un échantillon, elles ne font pas toujours apparaître les mêmes grains de l'échantillon, certains grains apparaissant plusieurs fois et certains autres grains n'apparaissant jamais. En effet les conditions de superposition des grains sont différentes pour chacune des 30 photographies numériques, par exemple dépendant de l'angle de prise de vue ou de l'éclairage lors de l'enregistrement de la photographie, ou en mélangeant à nouveau les grains du mélange entre deux enregistrements de photographies. Un total de 62x30 soit 1860 photographies numériques est donc obtenu pour l'ensemble des 62 échantillons.

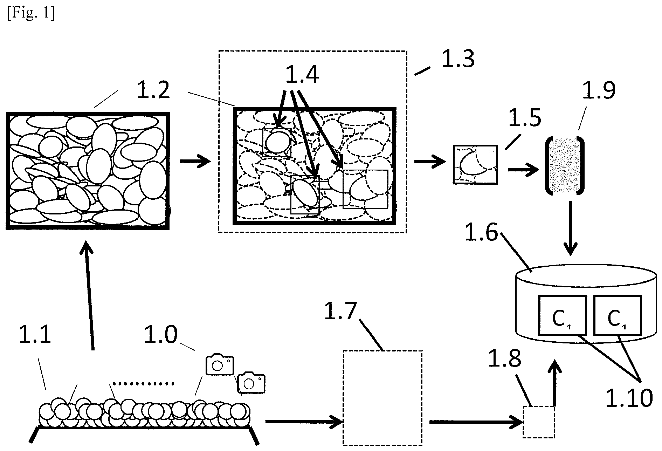

Sur la Fig.1 est représenté en 1.1 un échantillon de blé disposé sur une surface et l'enregistrement photographique au moyen d'un appareil photographique 1.0, des 30 photographies associées. En 1.2 est représentée une des 30 photographies, cette photographie ne faisant apparaître qu'une partie de l'échantillon 1.1. La photographie 1.2 qui montre une pluralité de grains de blés se chevauchant est aussi une parmi les 1860 photographies précédemment évoquées. Un logiciel 1.3 d'analyse d'images est utilisé pour fournir des images de grains de blés isolés 1.5. Pour cela, le logiciel 1.3 est capable d'effectuer une détection morphologique de grains de blé élémentaires apparaissant sur la photographie 1.2, permettant d'isoler dans celle-ci de petites zones rectangulaires 1.4 dans lesquelles un grain de blé élémentaire vient s'inscrire. Les parties d'image 1.4 considérées indépendamment de l'image complète 1.2, sont représentées à nouveau en 1.5 sur la Fig.1. Les images 1.5 sont plus généralement nommées dans cette description comme étant les images d'éléments végétaux isolés, délivrées par le logiciel 1.3.

Il n'est pas nécessaire que les zones rectangulaires 1.4 fassent apparaître un seul grain de blé ou même que ce grain de blé soit visible dans sa totalité. C'est pour cela que même si par la suite nous parlons en 1.5 d'images de grains de blés isolés, ou plus généralement, d'images d'éléments végétaux isolés, il aurait aussi été possible de parler d'images de grains de blés pseudo isolés ou d'images d'éléments végétaux pseudo isolés. Il est donc important de noter que, dans le mode de réalisation présenté, les images de grains isolés 1.5 peuvent être obtenues sans qu'il soit nécessaire de séparer physiquement les grains de blés de l'échantillon, ce qui constitue un avantage de coût.

A titre d'exemple, nous considérerons par la suite que le logiciel 1.3 d'extraction d'images d'éléments végétaux isolés permet d'obtenir à partir de chacune des 1860 photographies, 18 images de grains de blés isolés, soit un total de 33480 images de grains de blés isolés 1.5.

Les images 1.5 sont des photographies numérisées, présentant des pixels dont l'intensité est quantifiée. Par exemple, pour une image en noir et blanc, les niveaux de gris concernent uniquement les entiers compris entre 0 (noir) et 255 (blanc). Pour une image couleur, par exemple décrite selon le modèle RGB, les couleurs sont déterminées par un triplet de niveaux de gris (rouge : (255,0,0), vert : (0,255,0) et bleu : (0,0,255). La définition de la photographie correspond à la donnée hauteur multiplié par largeur, exprimée en pixels. Elle s'exprime usuellement en méga pixels, 1 méga pixel contenant 1 million de pixels. La résolution désigne le nombre de pixels par unité de longueur de l'image analogique. Elle permet de mesurer la qualité de l'image obtenue après numérisation : plus la résolution est élevée, meilleure est la qualité de l'image. D'autres formats de fichiers existent aujourd'hui pour stocker une image, comme par exemple les formats JPEG, avec pertes de données, ou les formats PNG et TIFF, sans pertes de données. D'autres formats d'images bidimensionnelles existent encore ou apparaîtront dans le futur. Dans une variante avantageuse de mise en œuvre de l'invention, que nous ne décrirons pas ici, les images de grains isolés 1.5 pourraient être des images tridimensionnelles contenant par exemple l'information du relief ou du volume des grains de blés isolés. Les images pourraient également être décrites dans un espace à 4 dimensions, 2 dimensions spatiales et 2 dimensions spectrales : en effet, une photographie d'échantillon 1.2 pourrait être constituée à la fois d'une image enregistrée dans le spectre visible et de la même image enregistrée dans un spectre infra rouge non visible, si l'appareil photographique est doté de capteurs pour chacun des deux spectres. L'image 1.2 pourrait aussi être la photographie d'un écran montrant une image d'un échantillon obtenue au moyen d'un microscope électronique à balayage. Les photographies d'échantillons 1.2 peuvent donc être obtenues dans une multitude de bandes spectrales.

Chacune des ces 33480 images de grain de blé isolé 1.5 est enregistrée dans la base de données des images d'apprentissage automatique 1.6, sous la forme d'une matrice d'image 1.9 qui va contribuer à l'apprentissage d'une machine d'apprentissage automatique, comme il sera décrit plus loin. La matrice d'image 1.9 contient les caractéristiques de l'image de grain de blé isolé 1.5. De façon optionnelle, il peut s'avérer nécessaire de mettre en forme la matrice d'image 1.9 pour la rendre compatible avec un format accepté à l'entrée de la machine d'apprentissage automatique. Cette mise en forme peut consister par exemple en un pré traitement de l'image effectuant des opérations de normalisation de l'intensité des pixels, de normalisation de l'espacement entre pixels ou de remise à une échelle de l'image, ou d'autres adaptations encore. Pour simplifier les figures, ces opérations optionnelles de mise en forme des matrices d'images ne sont pas représentées sur Fig.1, Fig.2 et Fig.3.

Une fois que les 1860 photographies 1.2 ont été obtenues comme précédemment indiqué, la teneur en protéine moyenne des 62 échantillons est déterminée en 1.7 par une des méthodes connues précédemment rappelées : les méthodes Dumas, Kjeldahl et NIRS. On obtient donc pour chaque échantillon 1.1 une valeur mesurée de sa teneur en protéine, ou plus généralement, une mesure d'une caractéristique de cet échantillon. Dans cet exemple, la caractéristique est donc une composition. Du fait de la mise en œuvre des méthodes Dumas, Kjekdahl et NIRS, cette composition d'échantillon est en fait une composition moyenne des éléments végétaux individuels qui constituent l'échantillon mesuré. Les valeurs 1.8 sont également enregistrées dans la base de données des images d'apprentissage 1.6.

Dans la base de données des images d'apprentissage 1.6, on associe à chaque matrice d'image 1.9 la valeur de caractéristique mesurée 1.8 de l'échantillon 1.1 correspondant. Attribuer une valeur de teneur en protéine à un grain de blé isolé est une approche surprenante, pour qui cherche à déterminer la teneur en protéine d'un échantillon constitué d'un mélange de grains de blés. En effet, actuellement, la teneur en protéine d'un grain de blé individuel ne peut pas être mesurée en tant que telle, car un grain de blé individuel fournit trop peu de matière pour utiliser une des méthodes connues, comme par exemple les méthodes Dumas, Kjeldahl et NIRS. Même si une méthode devenait un jour possible, l'opération demeurerait très couteuse car il faudrait procéder à des milliers de mesures de teneurs en protéine, en fait, autant que d'images de grains de blés isolés 1.5 différentes (33480 dans l'exemple décrit).

Une idée importante à la base de l'invention est au contraire d'associer à chacune des 33480 matrices d'images 1.9, une teneur en protéine fictive, identique à la teneur en protéine moyenne de l'échantillon 1.1 correspondant qui a fourni l'image de grain de blé isolé 1.5 considérée. Cette teneur en protéine est celle mesurée en 1.7 et dont le résultat est donné en 1.8 pour cet échantillon 1.1. Un avantage essentiel de ce procédé selon l'invention est de ne nécessiter que les 62 déterminations en 1.7 des compositions des 62 échantillons 1.1.

La base de données des images d'apprentissage est donc crée en 1.6, contenant d'une part l'enregistrement de 33480 matrices d'images 1.9, et d'autre part, les 33480 teneurs en protéine fictives qui leur ont été associées. Dans l'exemple numérique choisit, ces 33480 teneurs en protéine fictives ne peuvent prendre chacune qu'une des 62 valeurs de teneur en protéines moyenne effectivement mesurées sur les 62 échantillons 1.1. La base de données des images d'apprentissage automatique 1.6 contient toutefois bien 33480 cas d'apprentissage automatique qui sont pour l'immense majorité différents, puisque, sauf très rare effet du hasard, aucun de ces cas ne présentant en général à la fois, une même photographie d'un grain de blé isolé 1.5, et la même teneur en protéine fictive du grain de blé individuel correspondant.

Les teneur en protéine telles qu'obtenues en 1.8 prennent des valeurs typiquement comprises entre 7% et 15%. A titre d'exemple simplificateur, nous considérons dans la suite de cette description que la base de données des images d'apprentissage qui contient 33480 matrices d'images 1.9 a été organisée, par l'utilisateur, en deux classes 1.10 : une première classe, que nous appelons par la suite classe C₁, qui correspond a des matrices d'images 1.9 associées à un caractéristique d'élément végétal qui est ici une teneur en protéine 1.8 comprise entre 7% et 12% inclus ; une deuxième classe, que nous appelons par la suite classe C₂, qui correspond a de matrices d'images 1.9 associées à un caractéristique d'élément végétal qui est ici une teneur en protéine 1.8 comprise entre 12% exclu et 15%. L'utilisateur d'un procédé selon l'invention pourra bien sur choisir d'organiser la base de données des images de référence en un nombre plus important de classes, ou en utilisant une amplitude de valeur de teneur en protéine plus large, par exemple de 0% à 20%. La caractéristique d'élément végétal pourrait être autre que la valeur de la teneur en protéine, comme dit précédemment : par exemple la valeur de l'indice de chute de Hagberg, celle du taux de myxotoxines (Déoxynivalénol, zéaralénone, ochratoxine), celle du taux d'humidité, ou encore le poids spécifique ou un taux d'impuretés. Cette caractéristique d'élément végétal pourrait aussi être une variété. Dans le cas où la méthode selon l'invention serait utilisée pour classer des variétés, par exemple des variétés de pommes, la caractéristique fictive associée à une matrice d'image 1.9 correspondant à une image d'élément isolée 1.5, ici une image de pomme isolée 1.5, pourrait être le nom de la variété dominante dans l'échantillon de pommes 1.1 correspondant. Cette variété dominante dans l'échantillon 1.1 peut être déterminée de multiples façons : par exemple par l'examen visuel par une expert du domaine, ou en consultant les données décrivant la variété dominante qui a été plantée dans le verger duquel est issu l'échantillon.

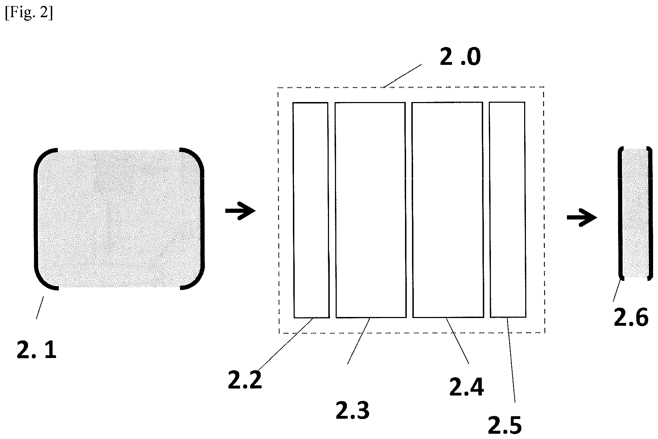

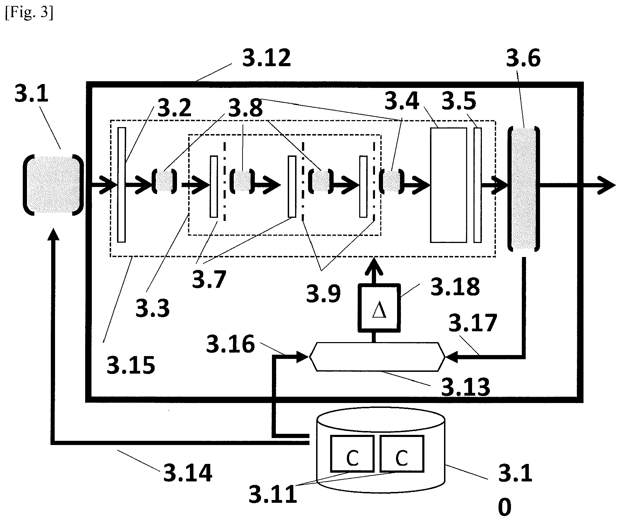

En relation avec les Fig. 2 et Fig.3, et dans une nouvelle étape d'un procédé selon l'invention, une machine d'apprentissage automatique est choisie. Par machine d'apprentissage automatique, nous faisons référence ici à la capacité pour une machine d'apprendre automatiquement, cette notion étant connue en anglais sous l'expression de machine learning. Il s'agit par exemple de programmes informatiques pouvant changer en cas d'exposition à de nouvelles données. Cette science s'est développée à partir de la théorie selon laquelle les ordinateurs peuvent apprendre sans être programmés pour effectuer des tâches spécifiques.

Dans le mode de mise en œuvre proposé, la machine d'apprentissage automatique contient un calculateur. A titre illustratif et non exhaustif ont peut citer comme exemples de calculateurs les calculateurs KNN pour k-Nearest-Neighbors algorithms. Le logiciel KNeighborsClassifier de la bibliothèque python scikit-learn est un exemple de machine KNN. D'autres exemples calculateurs sont les Support Vector Machine (SVM). D'autres exemples sont aussi les réseaux de neurones qui associent, en un graphe plus ou moins complexe, des objets élémentaires, souvent appelés neurones formels. D'autres exemples de calculateurs existent.

A titre d'exemple, nous présentons ici un mode de mise en oeuvre de l'invention utilisant un calculateur qui est un réseau de neurones, que l'on appelle en anglais Convolutional Neurone Network (CNN) ou encore ConvNet. Par la suite nous retiendrons l'expression réseaux CNN pour les désigner. Actuellement, un exemple de réseau CNN est donné par la machine VGG16, disponible dans la bibliothèque "Keras", pré-entrainée sur la base de données "ImageNet."

Les réseaux CNN permettent une mise en oeuvre avantageuse de l'invention car ils sont particulièrement adaptés à l'analyse d'images. Le réseau CNN est choisi de manière à pouvoir procéder à son apprentissage au moyen de la base de données des images d'apprentissage 1.6. L'objectif est, une fois terminée la phase d'apprentissage automatique, d'avoir rendu le réseau CNN apte à calculer un indicateur d'appartenance à une classe de teneur en protéine, pour tout nouveau grain de blé individuel, à partir d'une nouvelle matrice d'image correspondante, présentée en entrée du réseau CNN. Le résultat de cette indication pourra être exploité de multiples façons. Par exemple, en répétant l'opération pour plusieurs grains de blés individuels issus d'un nouvel échantillon, une valeur moyenne de leurs teneurs en protéine pourra être calculée permettant ainsi de caractériser le nouvel échantillon. D'autres méthodes d'exploitation du résultat donné par le réseau CNN entraîné peuvent être mis-en oeuvre, par exemple utilisant un vote de classe majoritaire.

Les aspects généraux des architectures et du fonctionnement des réseaux CNN sont connus et par exemple décrits dans l'ouvrage « Deep Learning » par Ian Gooffellow, Yoshua Bengio, et Aaron Courville, édité en 2016 par le Massachussetts Institute of Technology. Nous retiendrons dans le cadre de cette description la définition des réseaux CNN telle que donnée en anglais à la page 321 de cet ouvrage. « Convolutional networks are simply neural networks that use convolution in place of general matrix multiplication in at least one of their layers ». Une traduction approximative et donc non limitative de cette définition peut se formuler ainsi : les réseaux convolutifs sont simplement des réseaux de neurones qui utilisent une convolution, au lieu d'une opération de multiplication de matrice plus générale, dans au moins une de leurs couches.

Les réseaux de neurones CNN sont des réseaux de neurones artificiels acycliques, dans lequel le motif de connexion entre les neurones est inspiré par le cortex visuel des animaux. Les neurones de cette région du cerveau sont arrangés de sorte qu'ils correspondent à des régions qui se chevauchent lors du pavage du champ visuel. Leur fonctionnement est inspiré par les processus biologiques. Ils consistent en un empilage multicouche de perceptrons, dont le but est de prétraiter de petites quantités d'informations. La plus-part des réseaux CNN aujourd'hui commercialement disponibles s'inspirent du réseau AlexNet qui a été proposé en 2012.

Les réseaux de neurones sont formés d'une succession de couches contenant des neurones qui agissent comme des automates dotés d'une fonction de transfert qui transforme leurs entrées en sorties selon des règles précises. Par exemple, un neurone multiplie ses entrées, détermine la parité du résultat, et répond en émettant un signal qui indique cette parité. Ces neurones sont par ailleurs associés en réseaux dont la topologie des connexions peut prendre de nombreuses formes : réseaux proactifs, récurrents, etc. L'efficacité de la transmission des signaux d'un neurone à l'autre peut dépendre de poids ; on parle de « poids synaptique », ces poids pouvant être modifiés au cours de l'apprentissage du réseau CNN.

Les réseaux CNN aujourd'hui commercialement disponibles sont constitués de dizaines de couches. Pour des raisons de clarté, toutes ces couches ne seront pas décrites dans cette description. Sur Fig. 2, est représentée de manière schématique en 2.0 l'architecture d'un réseau CNN, que nous appelons ici calculateur de la machine d'apprentissage automatique. Ce calculateur est constitué de quatre blocks. Un bloc d'entrée 2.2, un premier block d'apprentissage 2.3, un deuxième bloc d'apprentissage 2.4 et une couche de sortie aussi appelée couche de classification, 2.5.

Le bloc d'apprentissage 2.3 est composé de nombreuses alternances de sous-couches de convolution et de sous-couches de pooling, non représentées, mais connues de l'homme de l'art. Le deuxième block d'apprentissage 2.4 est constitué de plusieurs couches entièrement connectées ; il est connecté à la couche de classification 2.5 qui délivre un indicateur d'appartenance à des classes 2.6, pour la matrice d'image 2.1. La matrice d'image 2.1 est celle qui a été représentée en 1.9 sur la Fig.1. Dans le mode de réalisation présenté, l'indicateur d'appartenance à des classes 2.6 pourra être un vecteur (0,1 , 0,9) dont les coordonnées indiquent pour le grain de blé correspondant à ladite matrice d'image 2.1, qu'il y a 10% de chance que sa teneur en protéine soit dans la plage de valeurs ayant permis de définir la classe C₁ (de 7% à 12% exclu) et 90% de chance que cette teneur en protéine soit dans la plage de valeurs ayant permis de définir la classe C₂ (de 12% inclus à 15%).

Dans une variante du procédé selon l'invention, le CNN peut délivrer comme indicateur de la teneur en protéine 2.6 une valeur de la teneur en protéine et non plus un vecteur de probabilité.

Dans d'autres variantes de mise en œuvre de l'invention, le nombre de classes d'apprentissage automatique peut être supérieur à 2 et la caractéristique d'élément végétal être un pourcentage d'humidité ou une variété ou une autre caractéristique, comme il a été dit précédemment.

La matrice d'image 2.1 présentée à l'entrée du calculateur 2.0 contient comme on l'a dit l'ensemble des informations décrivant l'image d'un grain de blé isolé 1.5, par exemple une image au format JPEG. Ces informations sont extraites de la base de données d'apprentissage 1.6, et sont présentées à la couche d'entrée 2.2 du calculateur 2.0.

Le bloc d'apprentissage 2.3 contient des filtres qui sont utilisés pour retrouver des motifs caractéristiques dans une image, appelés features en anglais. Le rôle de ces motifs caractéristiques est présenté plus en détail en relation avec la Fig.3.

Sur la Fig.3 est représentée à nouveau la matrice d'image 3.1 correspondant à l'image d'un grain de blé isolé 1.5 et précédemment notée 1.9 ou 2.1. La matrice 3.1 est extraite en 3.14 depuis la base de données des images d'apprentissage 3.10. La machine d'apprentissage automatique 3.12, contient le calculateur 3.15 qui est un réseau CNN constitué de la couche d'entrée 3.2, des deux blocks d'apprentissage 3.3 et 3.4, et de la couche de classification 3.5, qui délivre l'indicateur d'appartenance à des classes 3.6. De façon plus détaillée que sur la Fig.2, la Fig.3 présente des sous-couches de neurones 3.7 du block d'apprentissage 3.3. En 3.9 sont également représentés des filtres pour identifier des motifs caractéristiques. Sur la Fig.3 sont aussi représentés la base de données des images d'apprentissage 3.10, précédemment notée 1.6, et un comparateur 3.13.

Il est connu de l'homme de l'art que dans un réseau CNN, chaque sous-couche 3.7 reçoit une matrice de données 3.8 qu'elle transforme pour délivrer à sa sortie une nouvelle matrice de données 3.8 en entrée de la sous-couche 3.7 qui la suit. Ces matrices de données successives 3.8 obtenues à partir de la matrice d'image 3.1 sont donc transformées au cours de leur propagation depuis la couche d'entrée 3.2 jusqu'à la couche de classification 3 .5. Les matrices de données 3.8 sont donc différentes entre elles, chacune étant le résultat d'une transformation mathématique de la précédente par l'effet de la sous-couche 3.7 correspondante. Par exemple, la première sous-couche 3.7 du block d'apprentissage 3.3 peut donner à sa sortie une représentation à 64 dimensions à partir d'une représentation à 3 dimensions pour la matrice d'image 3.1.

Comme on l'a vu, dans un réseau CNN, l'une au moins de ces opérations mathématique est une convolution, quel que soit les caractéristiques de cette convolution. Une convolution peut par exemple mettre en jeux un filtre 3.9 qui détecte un motif caractéristique dans une matrice de données 1.8. Ces motifs caractéristiques sont des formes d'intérêt dans chaque matrice de données 3.8. Ces motifs caractéristiques sont générés de façon autonome à partir de calculs réalisés par le réseau CNN, sans aucun recours à une intervention humaine. Un bon motif caractéristique, tel que recherché de façon autonome par le réseau CNN, doit être suffisamment unique pour pouvoir différencier deux matrices d'images 3.1 à associer à des classes de teneur en protéine différentes, et suffisamment générique pour pouvoir reconnaître facilement les images à associer à une même classe, malgré leur diversité de représentations. Ces motifs caractéristiques sont représentés par de petites images, appelées templates en anglais et que nous décrivons ici par une matrice. La tâche du template matching en anglais, ou reconnaissance de motif caractéristique, est de reconnaître des motifs caractéristiques dans une matrice de données 1.8, en vue du classement de la matrice d'image 3.1. La reconnaissance de motifs réalisée avec des filtres peut utiliser l'opérateur de corrélation croisée. Cet opérateur peut transformer une matrice de données 3.8 en une nouvelle matrice de données 3.8 qui lui succède dans la propagation dans le réseau CNN. Concrètement, cette opération revient à faire glisser la matrice de données 3.8 sur le motif caractéristique décrit par le filtre 3.9.

Il est important de noter qu'avant l'utilisation des réseaux de neurones, la tâche de rechercher les motifs caractéristiques d'une image d'un objet identifiable par l'homme, était confiée à des spécialistes du domaine. Il était donc fait appel à un zoologue pour définir les caractéristiques discriminantes d'une « oreilles de chat » selon les races de chats considérées. De même, un botaniste était plus compétent pour définir les caractéristiques discriminantes de « pétales de roses », selon les variétés de roses connues. Au contraire, les motifs caractéristiques identifiés par un réseau CNN sont des abstractions mathématiques qui ne correspondent à aucune représentation connue par un être humain. Il est possible de se figurer ces motifs caractéristiques, détectés au moyen des filtres 3.9 comme des mosaïques informes calculées de façon autonome par le réseau CNN, au niveau de chacune des sous-couches 3.7 du block d'apprentissage 3.3. Ces représentations internes purement mathématiques sont appelées deep features en anglais ou caractéristiques profondes, par référence aux dizaines de sous-couches d'un réseau CNN. Des motifs caractéristiques différents sont calculés par le réseau CNN, au niveau de chacune des sous-couches 3.7.

Dans un mode de réalisation préféré, c'est le réseau CNN lui-même qui lors de la phase d'entrainement génère les motifs caractéristiques recherchés par les filtres 3.9. A partir d'un choix arbitraire des motifs caractéristiques initial, ces filtres sont adaptés progressivement par le réseau CNN, en fonction des images contenues dans la base de données des images d'apprentissage 3.10, selon un processus d'essais et de corrections répété.

Dans une variante de mise en œuvre de l'invention, le réseau CNN peut être utilisé conjointement avec un algorithme connu de l'homme de l'art, non représenté sur la Fig.3, pour l'extraction de motifs caractéristiques, comme par exemple un algorithme appelé en anglais « scale-invariant feature transform » (SIFT).

Dans un mode avantageux de mise en œuvre de l'invention, le réseau CNN est un réseau commercial pré-entrainé, par exemple de type VGG16, Inception, ResNet ou autres.... Ces réseaux CNN contiennent des algorithmes de deep learning pré-entrainés sur des bases de données usuelles. Ces réseaux CNN savent en effet réutiliser des filtres 3.9, pour détecter des motifs caractéristiques précédemment extraits de toutes sortes d'images usuelles, par exemple des objets ou des animaux, pour les utiliser pour le classement des matrices d'images de grains de blés isolés 3.1, en relation à des classes de teneur en protéine. La couche d'apprentissage automatique 3.3 de ces réseaux CNN connait donc déjà des motifs précédemment identifiés dans des contextes de classement différents de celui de la teneur en protéine de grains de blé. Les 33480 images de grains de blés isolés 1.5 servent alors à ré-entrainer tout ou partie des sous-couches 3.7, pour calculer ensemble des indicateurs d'appartenance à des classes 3.6 de teneur en protéine. Cette approche est décrite en anglais par l'expression « transfer learning ».

L'apprentissage de la machine d'apprentissage automatique 3.12, ici un réseau CNN, s'effectue de la manière suivante. Les 33480 matrices d'image sont organisées en groupes de 100 matrices d'images. Pour clarifier, l'exemple particulier suivant, qui aurait pu être différent, est choisi : les 100 premières matrices d'images correspondent au premier échantillon 1.1 dont la teneur en protéine connue en 1.8 a une valeur de 11,5%. Ces 100 premières images sont classées dans la classe C₁ précédemment définie. Les 100 matrices d'images suivantes correspondent au deuxième échantillon 1.1 dont la teneur en protéine est de 12,5% et sont donc placées dans la clase C₂ précédemment définie. Les 100 matrices d'images suivantes correspondent à nouveau au premier échantillon 1.1 et sont donc classées dans la classe C₁. Ces 300 matrices d'images sont successivement présentées à la couche d'entrée 3.2. Pour chacune d'elle, le calculateur 3.15 calcule un indicateur d'appartenance 3.6 aux classes C₁ et C₂ précédemment définies. Il s'agit d'un vecteur à deux éléments, chaque élément étant une probabilité d'appartenance aux classes C₁ ou C_{2.} Pour une matrice d'image donnée 3.1, le comparateur 3.13 compare l'indication de classe de la matrice d'image qu'il reçoit en 3.16 depuis la base de données d'apprentissage 3.10 à l'indicateur d'appartenance à des classes correspondant 3.6 qu'il reçoit en 3.17. Une fois répétée cette opération pour ces 300 premières matrices d'image, le calculateur 3.13 calcule une erreur globale d'apprentissage 3.18.

L'utilisateur de la machine d'apprentissage automatique 3.12 peut alors commander que l'erreur globale de classement 3.18 soit délivrée au calculateur 3.15, c'est-à-dire au réseau CNN, qui en réaction modifie des poids neuronaux de liaisons entre ses sous-couches 3.7. 300 deuxièmes indicateurs d'appartenance à des classes de valeurs sont alors recalculés par le calculateur 3.15 pour les mêmes 300 matrices d'images, ainsi qu'une deuxième valeur de l'erreur globale de classement 3.18. Si l'expérimentateur juge que cette deuxième erreur globale de classement reste trop élevée, c'est-à-dire que les indicateurs d'appartenance 3.6 sont trop éloignés de la réalité d'appartenance des 300 matrices d'images aux classes C₁ et C₂, alors l'utilisateur peut commander d'envoyer la deuxième erreur globale de classement au calculateur 3.15 qui à nouveau modifie des poids neuronaux puis délivre 300 troisièmes indicateurs d'appartenance à des classes 3.6 et ainsi de suite jusqu'à ce que l'utilisateur soit satisfait des indicateurs d'appartenance à des classes 3.6 reçus. L'utilisateur commande alors que 300 nouvelles matrices d'images 3.1 soient présentées à la machine d'apprentissage automatique 3.12, et le processus précédent est répété, jusqu'à épuisement des 33480 matrices d'images contenues dans la base de données des images d'apprentissage 3.10.

L'erreur globale de classement 3.18 obtenue pour une ensemble de 300 matrice d'images dans l'exemple considérée peut être une fonction quelconque des erreurs de classement pour chacune de ces 300 images (moyenne, écart type, etc.). L'erreur de classement d'une matrice d'image individuelle a une expression qui dépend en général de la forme retenue pour l'indicateur d'appartenance à des classes 3.6. Considérons par exemple une matrice d'image devant être normalement classée dans la classe C₂ c'est-à-dire correspondant à un grain issu d'un échantillon dont la teneur en protéine est comprise en 12% exclu et 15%. Si l'indicateur d'appartenance à des classes 3.6 prend la valeur (0,2 , 0,8), alors que la réponse parfaite aurait été (0 , 1), l'erreur de classement peut s'écrire 0,2 sur une échelle de 0 à 1. Il est possible de représenter différemment cette erreur, par exemple en définissant un seuil : l'erreur sera représentée par 1 si elle est supérieure à 10% et par 0 si elle est inférieur ou égale à 10%. Dans l'exemple choisi, l'indicateur d'appartenance à des classes 3.6, de valeur (0,2, 0,8) se traduirait par la valeur « 1 » car l'erreur sur la matrice d'image considérée est supérieure à 10%. L'erreur globale de classement 3.18 peut être alors définie comme une fonction, par exemple, de la somme des erreurs pour chacune des 300 matrices d'images. L'utilisateur de la machine d'apprentissage automatique peut commander des itérations de calcul par cette machine à partir de ces 300 images, jusqu'à obtenir une erreur globale de classement inférieure ou égale à 3, signifiant que pour 99% des matrices d'image, l'erreur de classement est inférieure à 10%. Bien sûr il est possible de définir beaucoup d'autres façons de calculer l'erreur globale de classement 3.18.

La représentation qui a été donnée sur la Fig.3 peut comporter de nombreuses variantes d'implémentation logicielle ou physique. Par exemple le comparateur 3.13 peut être interne à la machine d'apprentissage automatique 3.12 ou externe. La base de donnée des images d'apprentissage 3.10 peut être externe à la machine d'apprentissage automatique comme représenté sur la Fig.3 ou intégrée à cette machine. Il peut être aussi considéré que le comparateur 3.13 est inclus dans le calculateur 3.15. D'autres regroupements ou appellations de ces blocs fonctionnels sont donc possibles pour décrire la machine d 'apprentissage automatique 3.12.

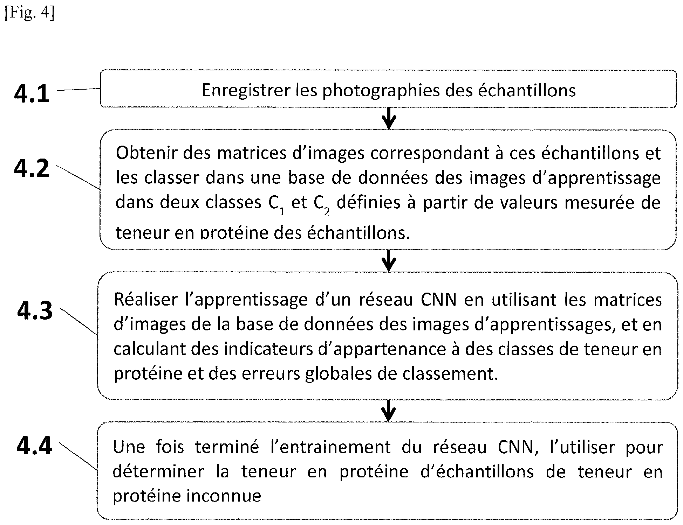

Sur la Fig.4 sont résumées les étapes d'un procédé selon l'invention. Les étapes 4.1, 4.2 et 4.3 correspondent à l'apprentissage de la machine d'apprentissage automatique. L'étape 4.4 correspond à son utilisation après apprentissage.

L'étape 4.1 correspond à l'enregistrement photographies 1.2 pour les 62 échantillons qui se répartissent en deux groupes, comme déterminé en 1.7 et 1.8 : ceux dont la teneur en protéine moyenne est inférieure ou égale à 12% et ceux dont la teneur en protéine est supérieure à 12%.

L'étape 4.2 consiste à obtenir grâce aux éléments 1.2, 1.3, 1.4, 1.5 et 1.9, 33480 matrices d'images à partir des 62 échantillons et à classer ces matrices d'images dans deux classes C₁ et C₂ représentées en 1.10 ou 3.11, d'une base de donnée des images d'apprentissage représentée en 1.6 ou 3.10 : les matrices d'images de la classe C1 sont celles obtenues à partir d'échantillons de teneur en protéine inférieure ou égale à 12%. Les matrices d'images de la classe C2 sont celles obtenues à partir d'échantillons de teneur en protéine supérieure à 12%.

L'étape 4.3 correspond à l'obtention d'indicateurs d'appartenance à des classes 3.6, permettant de calculer des erreurs globales de classements 3.18 pour itération du calcul par le calculateur 3.15 de la machine d'apprentissage 3.12.

L'étape 4.4 consiste, une fois terminé l'entrainement du réseau CNN, à l'utiliser pour déterminer la teneur en protéine d'échantillons dont la teneur en protéine est inconnue.

La séquence des étapes qui a été présentée en relation avec les Fig.1, Fig.2 et Fig.3 peut être modifiée. Par exemple la mesure de la caractéristique d'élément végétal 1.7 peut être effectuée avant ou après l'enregistrement des photographies 1.2. D'autres séquences sont donc possibles dans le cadre de la mise en œuvre de l'invention.

Un avantage découlant de l'invention est que sa mise en œuvre est de faible coût. D'abord, comme il a été indiqué précédemment, dans l'exemple de la mesure du taux de protéine du blé, parce que le nombre de mesures (Kjekdahl, Dumas, NIRS) est réduit, puisqu'il suffit d'analyser un nombre relativement limité d'échantillons de grains de blés. Ensuite parce qu'un moyen d'imagerie aussi simple que l'appareil photographique intégré à un téléphone portable peut être utilisé pour enregistrer sur un lieu de production, ou d'étude de la nature, des photographies de mélanges de grains. Une application pour téléphone portable peut être développée pour réaliser la communication entre le téléphone portable qui enregistre les photographies d'un échantillon inconnu 1.1 et une machine d'apprentissage automatique distante qui peut renvoyer un indicateur d'appartenance à des classes 3.6.

## Revendications

1. Procédé pour l'apprentissage d'une machine d'apprentissage automatique (3.12), apte à déterminer des caractéristiques d'éléments végétaux, comprenant les étapes consistant à :
enregistrer une première photographie d'échantillon (1.2) d'un premier échantillon constitué d'un premier mélange d'éléments végétaux (1.1),
enregistrer une deuxième photographie d'échantillon (1.2) d'un deuxième échantillon constitué d'un deuxième mélange d'éléments végétaux (1.1),
mesurer (1.7) une première valeur de caractéristique mesurée (1.8) pour ledit premier mélange d'éléments végétaux (1.1), et une deuxième valeur de caractéristique mesurée (1.8) pour ledit deuxième mélange d'éléments végétaux (1.1), la deuxième valeur de caractéristique mesurée étant différente de la première valeur de caractéristique mesurée, comportant de plus les étapes consistant à :
obtenir au moyen d'un logiciel d'analyse d'images (1.3) une pluralité de premières images d'élément végétal pseudo isolé, chaque première image d'élément végétal pseudo isolé (1.5) étant contenue (1.4) dans ladite première photographie d'échantillon (1.2) et représentant en totalité ou en partie un élément végétal dudit premier échantillon, chaque première image d'élément végétal pseudo isolé (1.5) étant représentée par une première matrice d'image (1.9, 2.1, 3.1),
obtenir au moyen dudit logiciel d'analyse d'images (1.3) une pluralité de deuxièmes images d'élément végétal pseudo isolé (1.5), chaque deuxième image d'élément végétal pseudo isolé (1.5) étant contenue (1.4) dans ladite deuxième photographie d'échantillon (1.2) et représentant en totalité ou en partie un élément végétal dudit deuxième échantillon, chaque deuxième image d'élément végétal pseudo isolé (1.5) étant représentée par une deuxième matrice d'image (1.9, 2.1, 3.1),
définir dans une base de données des images d'apprentissage (1.6, 3.10) au moins une première classe de matrices d'image (3.11) et une deuxième classe de matrices d'image (3.11), la première classe de matrices d'image étant associée à ladite première valeur de caractéristique mesurée (1.8) ou à une plage contenant ladite première valeur de caractéristique mesurée, et la deuxième classe de matrices d'image (3.11) étant associée à ladite deuxième valeur de caractéristique mesurée (1.8) ou à une plage contenant ladite deuxième valeur de caractéristique mesurée,
classer lesdites matrices d'image dans lesdites classes en fonction de la valeur de caractéristique mesurée respective pour le mélange d'éléments végétaux à partir duquel chaque dite image a été obtenue, l'étape de classer lesdites matrices d'image comportant classer lesdites premières matrices d'image (1.9, 2.1, 3.1) dans ladite première classe (1.10, 3.11) et classer lesdites deuxièmes matrices d'image (1.9, 2.1, 3.1) dans ladite deuxième classe (1.10, 3.11),
pour chacune desdites matrices d'image (1.9, 2.1, 3.1), calculer au moyen d'un calculateur (2.0, 3.15), un premier indicateur d'appartenance auxdites au moins deux classes, ledit premier indicateur d'appartenance représentant une première probabilité d'appartenance de la matrice d'image auxdites au moins deux classes (3.6),
mesurer au moyen d'un comparateur (3.13) une erreur globale de classement (3.18), ladite erreur globale de classement étant fonction des classes dans lesquelles lesdites matrices d'image ont été classées et des premières probabilités d'appartenance,
ledit calculateur (2.0, 3.15) modifiant, en réaction à la réception de ladite erreur globale de classement (3.18), au moins un de ses éléments de calcul, pour calculer ensuite des deuxièmes indicateurs d'appartenance auxdites au moins deux classes (2.6, 3.6) correspondant auxdites matrices d'image (1.9, 2 .1, 3.1), lesdits deuxièmes indicateurs d'appartenance représentant des deuxièmes probabilités d'appartenance des matrices d'image auxdites au moins deux classes (3.6), ledit au moins un élément de calcul étant modifié de manière que les deuxièmes probabilités d'appartenance des matrices d'image auxdites au moins deux classes soient moins éloignées de la réalité d'appartenance desdites matrices d'image aux au moins deux classes que les premières probabilités d'appartenance.

2. Procédé selon la revendication 1 **caractérisé en ce que** les étapes de ce procédé sont réitérées au moyen d'échantillons complémentaires (1.1), de photographies d'échantillons complémentaires (1.2), d'images d'éléments végétaux isolés complémentaires (1.5) et de matrices d'image complémentaires (1.9).

3. Procédé selon la revendication 1 **caractérisé en ce que** ledit calculateur (2.0, 3.15) fait partie du groupe comportant un réseau de neurones convolutif, un algorithme k-Nearestneighbors algorithms ou un algorithme support vector machine.

4. Procédé selon la revendication 1 **caractérisé en ce que** ledit calculateur (2.0, 3.15) est un réseau de neurones convolutif et que ledit élément de calcul est le poids synaptique d'un neurone.

5. Procédé selon la revendication 1 **caractérisé en ce que** ledit échantillon est un mélange d'éléments végétaux faisant partie du groupe comprenant un grain, une graine, une tige, une fleur, un fruit.

6. Procédé selon la revendication 1 **caractérisé en ce que** lesdits éléments végétaux font partie du groupe comprenant des céréales, du café, du cacao, des grains végétaux, des graines végétales, des mélanges de variétés ou d'espèces.

7. Procédé selon la revendication 1 **caractérisé en ce que** ladite caractéristique fait partie du groupe contenant une valeur ou une plage de valeurs de composition d'élément végétal, ou une variété d'élément végétal.

8. Procédé selon la revendication 1 **caractérisé en ce que** ladite valeur de caractéristique d'échantillon (1.8) est obtenue à partir d'une méthode faisant partie du groupe comprenant d'une part, pour une caractéristique de composition, la méthode de Kjeldahl, la méthode de Dumas ou la méthode de spectroscopie dans le proche infrarouge ou le « falling number » pour l'indice de chute de Hagberg, et d'autre part, pour une caractéristique de variété, la détermination de la variété majoritaire de l'échantillon.

9. Procédé selon la revendication 1 **caractérisé en ce que** ladite caractéristique mesurée (1.8) fait partie d'un groupe contenant la mesure du taux de protéine, de l'indice de chute de Hagberg, du taux de myxotoxines (Déoxynivalénol, zéaralénone, ochratoxine), du taux d'humidité, du poids spécifique ou d'un taux d'impuretés.

10. Procédé selon la revendication 9 **caractérisé en ce que** lesdites mesures utilisent les kits ELISA ou kits Bandelettes pour la mesure des mycotoxines ou l'humidimètre (piézo-électrique ou infrarouge) pour la mesure de l'humidité ou l'analyse visuelle pour la mesure du taux d'impureté ou le « falling number » pour l'indice de chute de Hagberg.

11. Procédé selon la revendication 1 **caractérisé en ce que** ledit indicateur d'appartenance auxdites au moins deux classes (2.6, 3.6) fait partie du groupe comprenant l'indication d'une parmi les dites au moins deux classes (1.10, 3.11) ou une probabilité d'appartenance à l'une ou à l'autre desdites au moins deux classes.

12. Procédé selon la revendication 1 comportant de plus les étapes consistant à enregistrer une nouvelle photographie d'échantillon (1.2) d'un nouvel échantillon (1.1) constitué d'un nouveau mélange d'éléments végétaux de caractéristique inconnue, obtenir au moyen d'un logiciel d'analyse d'images (1.3) une nouvelle image d'élément végétal isolé (1.5) contenue dans ladite nouvelle photographie d'échantillon (1.2), et une nouvelle matrice d'image correspondante (1.9, 2.1, 3.1), ledit calculateur (2.0, 3.15) calculant un indicateur d'appartenance auxdites au moins deux classes (2.6, 3.6) pour ladite nouvelle matrice d'image (1.9 ; 2.1, 3.1).

## Patentansprüche

1. , Verfahren zum Trainieren einer Maschine für maschinelles Lernen (3.12), welche dazu geeignet ist, die Eigenschaften von Pflanzenelementen zu bestimmen, umfassend die Schritte bestehend aus:
erfassen einer ersten Probephotographie (1.2) einer ersten Probe bestehend aus einer ersten Mischung von Pflanzenelementen (1.1),
erfassen einer zweiten Probephotographie (1.2) einer zweiten Probe bestehend aus einer zweiten Mischung von Pflanzenelementen (1.1),
messen (1.7) eines ersten gemessenen Eigenschaftswertes (1.8) für die erste Mischung von Pflanzenelementen (1.8),und eines zweiten gemessenen Eigenschaftswert (1.8) für die zweite Mischung von Pflanzenelementen, wobei der zweite gemessene Eigenschaftswert unterschiedlich zum ersten gemessenen Eigenschaftswert ist,
umfassend weiterhin die Schritte bestehend aus:
erzeugen einer Vielzahl von ersten Bilder des pseudo-isolierten Pflanzenelements, mittels einer Bildanalysesoftware (1.3), wobei jedes erste Bild des pseudo-isolierten Pflanzenelements (1.5) in der ersten Probephotographie (1.2) enthalten (1.4) ist und ein Pflanzenelement der ersten Probe in der Gesamtheit oder in Teilen darstellt, wobei jedes erste Bild des pseudo-isolierten Pflanzenelements (1.5) durch eine erste Bildmatrix (1.9, 2.1, 3.1) dargestellt wird,
erzeugen einer Vielzahl von zweiten Bilder des pseudo-isolierten Pflanzenelements mittels der Bildanalysesoftware (1.3), wobei jedes zweite Bild des pseudo-isolierten Pflanzenelements (1.5) in der zweiten Probephotographie (1.2) enthalten (1.4) ist und ein Pflanzenelement der zweiten Probe in der Gesamtheit oder in Teilen darstellt, wobei jedes zweite Bild des pseudo-isolierten Pflanzenelements (1.5) durch eine zweite Bildmatrix (1.9, 2.1, 3.1) dargestellt wird,
definieren in einer Trainingsbilderdatenbank (1.6, 3.10) mindestens eine erste Klasse von Bildmatrizen (3.11) und eine zweite Klasse von Bildmatrizen (3.11), wobei die erste Klasse der Bildmatrizen mit dem ersten gemessenen Eigenschaftswert (1.8) oder mit einem Bereich, welcher den ersten gemessenen Eigenschaftswert enthält, assoziiert ist und die zweite Klasse der Bildmatrizen (3.11) mit dem zweiten gemessenen Eigenschaftswert (1.8) oder einem Bereich, welcher den zweiten gemessenen Eigenschaftswert enthält, assoziiert ist,
klassifizieren der Bildmatrizen in den Klassen in Abhängigkeit des jeweiligen gemessenen Eigenschaftswertes der Mischung von Pflanzenelementen aus dem jedes Bild erzeugt wird, wobei der Schritt des Klassifizierens der Bildmatrizen umfasst das Klassifizieren der ersten Bildmatrizen (1.9, 2.1, 3.1) in der ersten Klasse (1.10, 3.11) und das Klassifizieren der zweiten Bildmatrizen (1.9, 2.1, 3.1) in der zweiten Klasse (1.10, 3.11),
berechnen für jede der Bildmatrizen (1.9, 2.1, 3.1) einen ersten Zugehörigkeitsindikator zu den mindestens zwei Klassen mittels eines Rechners (2.0, 3.15), wobei der erste Zugehörigkeitsindikator eine erste Zugehörigkeitswahrscheinlichkeit der Bildmatrizen zu den mindestens zwei Klassen (3.6) darstellt,
messen eines globalen Fehlers der Klassifikation (3.18) mittels eines Komparators (3.13), wobei der globale Fehler der Klassifikation abhängig ist von den Klassen in denen die Bildmatrizen klassifiziert wurden und der ersten Zugehörigkeitswahrscheinlichkeit,
wobei der Rechner (2.0., 3.15), als Reaktion auf den Empfang des globalen Fehlers der Klassifikation (3.18), mindestens eines seiner Berechnungselemente ändert, um danach zweite Zugehörigkeitsindikatoren zu den mindestens zwei Klassen (2.6, 3.6), die den Bildmatrizen entsprechen, zu berechnen, wobei die zweiten Zugehörigkeitsindikatoren zweite Zugehörigkeitswahrscheinlichkeiten der Bildmatrizen zu den mindestens zwei Klassen (3.6) darstellen,
wobei das mindestens eine Berechnungselement so geändert wird, dass die zweiten Zugehörigkeitswahrscheinlichkeiten der Bildmatrizen zu den mindestens zwei Klassen weniger entfernt sind von der Zugehörigkeitsrealität der Bildmatrizen zu den mindestens zwei Klassen als die ersten Zugehörigkeitswahrscheinlichkeiten.

2. . Verfahren gemäß Anspruch 1 **dadurch gekennzeichnet, dass** die Verfahrensschritte mittels zusätzlicher Proben (1.1), zusätzlicher Probephotographien (1.2), zusätzlicher Bilder von isolierten Pflanzenelementen und zusätzlicher Bildmatrizen wiederholt werden.

3. . Verfahren gemäß Anspruch 1, **dadurch gekennzeichnet, dass** der Rechner (2.0, 3.15) aus der Gruppe stammt, welche ein künstliches neuronales Netzwerk, ein k-nearest neighbor-Algorithmus oder einen support-vector-machine-Algorithmus umfasst.

4. . Verfahren gemäß Anspruch 1, **dadurch gekennzeichnet, dass** der Rechner (2.0, 3.15) ein künstliches neuronales Netzwerk ist und dass das Berechnungselement das synaptische Gewicht eines Neurons ist.

5. . Verfahren nach Anspruch 1, **dadurch gekennzeichnet, dass** die Probe eine Mischung aus pflanzlichen Elementen ist, die aus der Gruppe bestehend aus einem Korn, einem Samen, einem Stängel, einer Blüte, einer Frucht stammt

6. . Verfahren nach Anspruch 1, **dadurch gekennzeichnet, dass** die pflanzlichen Bestandteile aus der Gruppe bestehend aus Getreide, Kaffee, Kakao, Pflanzenkörner, Pflanzensamen, Sorten- oder Artenmischungen stammen.

7. . Verfahren gemäß Anspruch 1, **dadurch gekennzeichnet, dass** die Eigenschaft aus der Gruppe stammt umfassend einen Wert oder einen Bereich eines Wertes der Mischung der Pflanzenelemente oder eine Vielzahl von Pflanzenelementen.

8. . Verfahren gemäß Anspruch 1, **dadurch gekennzeichnet, dass** der Eigenschaftswert der Probe (1.8) ausgehend von einer Methode erzeugt wird, welche aus der Gruppe stammt, welche zum einen für eine Eigenschaft der Mischung die Kjedahl- Methode, die Dumas-Methode, die Nahinfrarot-Spektroskopie-Methode oder der Falling Number für die Hagberg-Fallzahl, und zum anderen für die Eigenschaft der Sorte, die Bestimmung der überwiegenden Sorte der Probe, umfasst.

9. . Verfahren gemäß Anspruch 1, **dadurch gekennzeichnet, dass** die gemessene Eigenschaft (1.8) aus der Gruppe stammt, welche die Messung des Proteinanteils, der Fallzahl nach Hagberg, des Myxotoxinenanteils (Deoxynivalenol, Zearalenon, Ochratoxin), des Feuchtigkeitsanteils, des spezifischen Gewichts oder des Verunreinigungsanteils umfasst.

10. . Verfahren gemäß Anspruch 9, **dadurch gekennzeichnet, dass** die Messungen die ELISAkits oder Bandelettes-Kits für die Messung der Myxotoxine oder den Luftfeuchtigkeitsmesser (piezoelektrisch oder Infrarot) für die Messung der Feuchtigkeit oder die visuelle Analyse für die Messung des Verunreinigungsanteils oder die Falling Number für die Fallzahl von Hagberg verwenden.

11. . Verfahren gemäß Anspruch 1, **dadurch gekennzeichnet** das der Zugehörigkeitsindikator zu den mindestens zwei Klassen (2.6, 3.6) aus der Gruppe stammt, welche umfasst die Indikation einer der mindestens zwei Klassen (1.10, 3.11) oder eine Zugehörigkeitswahrscheinlichkeit zu der einen oder der anderen der mindestens zwei Klassen.

12. . Verfahren gemäß Anspruch 1, umfassend weiterhin die Schritte bestehend aus registrieren einer neuen Probephotographie (1.2) einer neuen Probe (1.1) bestehend aus einer neuen Mischung von Pflanzenelementen mit unbekannten Eigenschaften, erhalten eines neuen Bildes eines isolierten Pflanzenelementes (1.5) mittels eine Bildanalysesoftware (1.3), welches in der neuen Probephotographie (1.2) enthalten ist, und eine neue entsprechende Bildmatrix (1.9, 2.1, 3.1), wobei der Rechner (2.0, 3.1) die Zugehörigkeitswahrscheinlichkeit zu den mindestens zwei Klassen (2.6, 3.6) für die neue Bildmatrix (1.9, 2.1, 3.1) berechnet.

## Claims

1. A method for training an automatic learning machine (3.12) capable of determining characteristics of plant elements, comprising the following steps:
recording a first sample photograph (1.2) of a first sample made up of a first mixture of plant elements (1.1);
recording a second sample photograph (1.2) of a second sample made up of a second mixture of plant elements (1.1);
measuring (1.7) a first measured characteristic value (1.8) for said first mixture of plant elements (1.1), and a second measured characteristic value (1.8) for said second mixture of plant elements (1.1), with the second measured characteristic value being different from the first measured characteristic value,
further comprising the following steps:
obtaining, by means of image analysis software (1.3), a plurality of first images of a pseudo-isolated plant element, each first image of a pseudo-isolated plant element (1.5) being contained (1.4) in said first sample photograph (1.2) and depicting totally or partially a plant element of said first sample, each said first image of a pseudo-isolated plant element (1.5) being represented by a first image matrix (1.9, 2.1, 3.1);
obtaining, by means of said image analysis software (1.3), a plurality of second images of a pseudo-isolated plant element (1.5), each second image of a pseudo-isolated plant element (1.5) being contained (1.4) in said second sample photograph (1.2) and depicting totally or partially a plant element of said second sample, each said second image of a pseudo-isolated plant element (1.5) being represented by a second image matrix (1.9, 2.1, 3.1);
defining, in a database (1.6, 3.10) of the training images, at least one first class of image matrices (3.11) and one second class of image matrices (3.11), the first class of image matrices being associated with said first measured characteristic value (1.8) or with a range containing said first measured characteristic value; and
the second class of image matrices (3.11) being associated with said second measured characteristic value (1.8) or with a range containing said second measured characteristic value;
classifying said image matrices in said classes as a function of the respective measured characteristic value for the mixture of plant elements from which each of said images has been obtained, the step of classifying said image matrices comprising classifying said first image matrices (1.9, 2.1, 3.1) in said first class (1.10, 3.11) and classifying said second image matrices (1.9, 2.1, 3.1) in said second class (1.10, 3.11);
calculating, for each of said image matrices (1.9, 2.1, 3.1), by means of a calculator (2.0, 3.15), a first indicator of inclusion in said at least two classes, said first inclusion indicator representing a first probability of inclusion of the image matrix in said at least two classes (3.6);
measuring, by means of a comparator (3.13), an overall classification error (3.18), said overall classification error being dependent on classes in which said image matrices have been classified and on first inclusion probabilities;
modifying, by said calculator (2.0, 3.15), in response to the reception of said overall classification error (3.18), at least one of its calculation elements, for subsequently calculating second indicators of inclusion in said at least two classes (2.6, 3.6) corresponding to said image matrices (1.9, 2.1, 3.1), said second inclusion indicators representing second probabilities of inclusion of the image matrices in said at least two classes (3.6), said at least one calculation element being modified so that the second inclusion probabilities of the image matrices in said at least two classes are closer to the true inclusion of said image matrices in the at least two classes than the first inclusion probabilities.

2. The method as claimed in claim 1, **characterized in that** the steps of this method are repeated by means of additional samples (1.1), of additional sample photographs (1.2), of additional images of isolated plant elements (1.5) and of additional image matrices (1.9).

3. The method as claimed in claim 1, **characterized in that** said calculator (2.0, 3.15) forms part of the group comprising a convolutional neural network, a k-Nearestneighbors algorithm or a support vector machine algorithm.

4. The method as claimed in claim 1, **characterized in that** said calculator (2.0, 3.15) is a convolutional neural network and **in that** said calculation element is the synaptic weight of a neuron.

5. The method as claimed in claim 1, **characterized in that** said sample is a mixture of plant elements forming part of the group comprising a grain, a seed, a stem, a flower, a fruit.

6. The method as claimed in claim 1, **characterized in that** said plant elements form part of the group comprising cereals, coffee, cocoa, plant grains, plant seeds, mixtures of varieties or of species.

7. The method as claimed in claim 1, **characterized in that** said characteristic forms part of the group containing a value or a range of values of a composition of a plant element, or a variety of a plant element.

8. The method as claimed in claim 1, **characterized in that** said characteristic sample value (1.8) is obtained based on a method forming part of the group comprising, on the one hand, for a compositional characteristic, the Kjeldahl method, the Dumas method or the near infra-red spectroscopy method or the "falling number" for the Hagberg falling number, and, on the other hand, for a variety characteristic, determining the predominant variety of the sample.

9. The method as claimed in claim 1, **characterized in that** said measured characteristic (1.8) forms part of a group containing the measurement of the protein content, the Hagberg falling number, the level of myxotoxins (deoxynivalenol, zearalenone, ochratoxine), the moisture content, the specific weight or a level of impurities.

10. The method as claimed in claim 9, **characterized in that** said measurements use ELISA kits or strip kits for measuring mycotoxins or a moisture meter (piezoelectric or infrared) for measuring moisture or a visual analysis for measuring the level of impurity or the "falling number" for the Hagberg falling number.

11. The method as claimed in claim 1, **characterized in that** said indicator for inclusion in said at least two classes (2.6, 3.6) forms part of the group comprising the indication of one from among said at least two classes (1.10, 3.11) or a probability of inclusion in either one of said at least two classes.

12. The method as claimed in claim 1, further comprising the steps involving recording a new sample photograph (1.2) of a new sample (1.1) made up of a new mixture of plant elements with an unknown characteristic, obtaining, by means of image analysis software (1.3), a new image of an isolated plant element (1.5) contained in said new sample photograph (1.2), and a new corresponding image matrix (1.9, 2.1, 3.1), said calculator (2.0, 3.15) calculating an indicator of inclusion in said at least two classes (2.6, 3.6) for said new image matrix (1.9, 2.1, 3.1).
